# EUROPÄISCHE PATENTANMELDUNG

(11) **EP 1 835 270 A1**
(43) Veröffentlichungstag der Anmeldung: **19.09.2007**
(21) Anmeldenummer: 06005332.9
(22) Anmeldetag: 15.03.2006
(51) Int. Cl.: G01K 13/02, G01J 5/04

(54) **Temperatursensor für eine Turbine**

(71) Anmelder: SIEMENS AKTIENGESELLSCHAFT, 80333 München (DE)
(72) Erfinder: Bayram, Gülsen, 45356 Essen (DE); Braun, Gilbert, 52134 Herzogenrath (DE); Ertle, Volker, 45529 Hattingen (DE); Henke, Christian, 45472 Mülheim an der Ruhr (DE); Pahl, Andreas, 40589 Düsseldorf (DE); Prade, Bernd, Dr., 45478 Mülheim an der Ruhr (DE); Scheuer, Uwe, 45475 Mülheim (DE); Stammen, Wolfgang, 46119 Oberhausen (DE); Zastrozny, Edmund, 45359 Essen (DE)

(57) **Zusammenfassung**

Ein Temperatursensor (20) für eine Turbine (10) eines thermischen Kraftwerks, insbesondere für eine Gasturbine, zum Messen der Temperatur eines Strömungsmediums innerhalb der Turbine (10) ist erfindungsgemäß gekennzeichnet durch einen Infrarotdetektor (28) zum Messen einer Infrarotstrahlung (36).

## Beschreibung

Die Erfindung betrifft einen Temperatursensor für eine Turbine eines thermischen Kraftwerks, insbesondere für eine Gasturbine, zum Messen der Temperatur eines Strömungsmediums innerhalb der Turbine. Die Erfindung betrifft ferner eine Turbine für ein thermisches Kraftwerk, insbesondere eine Gasturbine, mit einem derartigen Temperatursensor.

Bei herkömmlichen Turbinen thermischer Kraftwerke, insbesondere bei vorbekannten Gasturbinen wird zur Messung der Temperatur eines die Turbine durchströmenden Strömungsmediums ein von einer Außenwandung umgebener Temperatursensor verwendet. Der Temperaturfühler steht dabei in direktem Kontakt mit der Innenseite der Außenwandung und misst die dort vorliegende Temperatur. Allerdings treten bei den vorbekannten Temperatursensoren oft Verzögerungen in der Temperaturerfassung bei sich verändernder Temperatur des Strömungsmediums auf.

Eine der Erfindung zugrunde liegende Aufgabe besteht darin, eine Turbine mit einem Temperatursensor der eingangs genannten Art dahingehend zu verbessern, dass eine Temperaturveränderung des Strömungsmediums möglichst präzise und zeitnah verfolgt werden kann.

Diese Aufgabe ist erfindungsgemäß mit einem gattungsgemäßen Temperatursensor gelöst, welcher einen Infrarotdetektor zum Messen einer Infrarotstrahlung aufweist. Die Aufgabe ist erfindungsgemäß ferner mit einer Turbine gelöst, die mit einem derartigen erfindungsgemäßen Temperatursensor versehen ist.

Mittels dem erfindungsgemäßen Infrarotdetektor wird eine äußerst schnelle Erfassung der Temperatur des Strömungsmediums möglich, indem eine hinsichtlich der Temperatur des Strömungsmediums charakteristische Infrarotstrahlung mittels dem Infrarotdetektor gemessen wird. Da sich die Infrarotstrahlung mit Lichtgeschwindigkeit ausbreitet, lässt sich eine Veränderung der Temperatur des Strömungsmediums präzise und ohne wesentliche zeitliche Verzögerung verfolgen.

Als Strömungsmedium der Turbine, dessen Temperatur mittels dem Infrarotdetektor gemessen wird, kommen insbesondere in einer Brennkammer einer Gasturbine erzeugte Verbrennungsgase in Frage. Durch kontinuierliche Messung der Temperatur der die Brennkammer verlassenden Verbrennungsgase mittels dem erfindungsgemäßen Temperatursensor kann der Zustand einer Flamme in der Brennkammer genau überwacht werden. Durch die zeitgenaue und präzise Temperaturerfassung des Abgases mittels des erfindungsgemäßen Temperatursensors lässt sich die Flammenentwicklung innerhalb der Brennkammer damit besser steuern, wodurch das Brennverhalten der Gasturbine verbessert werden kann. Als Infrarotdetektor des erfindungsgemäßen Temperatursensors kommen insbesondere Thermopaare, pneumatische oder pyroelektrische Detektoren und Bolometer in Frage. Der Messvorgang innerhalb des Infrarotdetektors beruht auf einer Temperaturabhängigkeit einer bzw. eines jeweils durch die Infrarotstrahlung induzierten Spannung, Widerstands, Gasvolumens oder auf einer permanenten elektrischen Polarisation.

In einer vorteilhaften Ausführungsform ist der Infrarotsensor zum Messen einer Intensität der Infrarotstrahlung ausgebildet. Damit lässt sich auf besonders einfache und effektive Weise die Temperatur des Strömungsmediums innerhalb der Turbine bestimmen.

Es ist weiterhin zweckmäßig, wenn der Temperatursensor einen Hohlkörper umfasst, der insbesondere eine längliche Form aufweist. Dies ermöglicht es, den Infrarotdetektor innerhalb des Hohlkörpers anzuordnen und damit vor schädlichen Einwirkungen des Strömungsmediums zu schützen. Damit bleibt die Fähigkeit des Infrarotdetektors einer genauen Messung der Infrarotstrahlung erhalten.

In darüber hinaus vorteilhafter Ausführungsform umfasst der Hohlkörper eine erste Stirnseite, die insbesondere eine gerundete Form aufweist. Die Ausführung des Hohlkörpers mit einer ersten Stirnseite ermöglicht es, den Hohlkörper derart im Strömungsmedium anzuordnen, dass die Stirnseite fokussiert vom Strömungsmedium angeströmt wird. Damit kann die Stirnseite des Hohlkörpers schnell und effizient die Temperatur des Strömungsmediums annehmen, wodurch die Schnelligkeit und die Genauigkeit der Temperaturerfassung durch den Temperatursensor weiter verbessert werden. Durch Vorsehen einer gerundeten Form der ersten Stirnseite kann diese strömungsmechanisch besser angeströmt werden. Damit kann insbesondere ein Ausbilden von Strömungswirbeln vermieden werden. Die Angleichung der Temperatur der ersten Stirnseite an die Temperatur des Strömungsmediums kann damit besonders schnell erfolgen.

Damit sich die Temperatur der Wandung des Hohlkörpers an der ersten Stirnseite möglichst schnell an die Temperatur des Strömungsmediums angleichen kann, ist es zweckmäßig, wenn die Wandung des Hohlkörpers an der ersten Stirnseite ein Material mit geringer spezifischer Wärmekapazität enthält, welches insbesondere an einer Außenseite der Wandung angeordnet ist. Es ist insbesondere besonders vorteilhaft, wenn das Material mit geringer spezifischer Wärmekapazität ein Metall oder eine spezielle Oxidschicht aufweist. Diese Materialien nehmen besonders schnell die Temperatur des sie umströmenden Strömungsmediums an.

Weiterhin ist es vorteilhaft, wenn die Wandung des Hohlkörpers an der ersten Stirnseite Quarzglas enthält, welches insbesondere mit dem Material mit geringer spezifischer Wärmekapazität beschichtet ist. Aufgrund der hohen Temperaturbeständigkeit sowie chemischen Beständigkeit von Quarzglas kann durch die Verwendung von Quarzglas an der ersten Stirnseite des Hohlkörpers die Lebensdauer des Temperatursensors verbessert werden. Das Material mit geringer spezifischer Wärmekapazität dient als Konvektionsoberfläche gegenüber dem Strömungsmedium. Durch die hohe Durchlässigkeit von Quarzglas bezüglich elektromagnetischer Strahlung kann von der Beschichtung ausgehende Infrarotstrahlung ohne wesentliche Verluste in das Innere des Hohlkörpers eintreten, worin der Infrarotdetektor zum Messen der Infrarotstrahlung angeordnet ist.

Weiterhin ist es vorteilhaft, wenn der Infrarotdetektor einer Innenseite der Wandung an der ersten Stirnseite des Hohlkörpers gegenüber liegend, insbesondere an einer entgegengesetzt zur ersten Stirnseite angeordneten zweiten Stirnseite des Hohlkörpers, angeordnet ist. Damit kann der Infrarotdetektor besonders wirksam von der ersten Stirnseite des Hohlkörpers in den Innenraum des Hohlkörpers abgestrahlte Infrarotstrahlung erfassen. Eine Temperaturmessung des Strömungsmediums kann damit besonders genau und ohne zeitliche Verzögerung erfolgen. Außerdem ist der Infrarotdetektor wirksam vor unmittelbarem Kontakt mit dem Strömungsmedium geschützt.

Darüber hinaus ist es zweckmäßig, wenn die Wandung einen durchsichtigen Wandabschnitt aufweist, der insbesondere zwischen einer ersten und einer zweiten Stirnseite des Hohlkörpers angeordnet ist. Insbesondere kann der durchsichtige Wandabschnitt als Sichtrohr ausgebildet sein, und vorteilhafterweise aus Quarzglas bestehen. So kann der Temperatursensor ohne größeren Aufwand einer visuellen Prüfung auf Verunreinigungen innerhalb des Hohlkörpers unterzogen werden. Damit kann die optimale Funktionsfähigkeit des Temperatursensors durch einfache Sichtprüfung bei üblichen Wartungsvorgängen eruiert werden.

In einer vorteilhaften Ausführungsform der erfindungsgemäßen Turbine weist die Turbine eine Brennkammer zum Verbrennen eines Gas/Brennstoffgemisches und einen der Brennkammer nachgeschalteten Abgaskanal zum Führen von in der Brennkammer bei der Verbrennung des Gas/Brennstoffgemisches erzeugtem Abgas auf, wobei der Temperatursensor in dem Abgaskanal zum Messen der Temperatur des Strömungsmediums in Form des Abgases angeordnet ist. Vorteilhafterweise befindet sich zwischen der Brennkammer und dem Abgaskanal ein Turbinenschaufelabschnitt, in dem ein Turbinenrotor über Turbinenschaufeln von den aus der Brennkammer austretenden Abgasen angetrieben wird. Der Temperatursensor ist zweckmäßigerweise hinter einem der Lagerung des Turbinenrotors dienenden Lagerstern angeordnet.

Nachfolgend wird ein Ausführungsbeispiel einer erfindungsgemäßen Turbine anhand der beigefügten schematischen Zeichnungen näher erläutert. Es zeigt:
- FIG 1: eine Draufsicht auf ein Ausführungsbeispiel einer erfindungsgemäßen Turbine mit einem erfindungsgemäßen Temperatursensor, sowie
- FIG 2: einen Längsschnitt des Temperatursensors gemäß FIG 1.

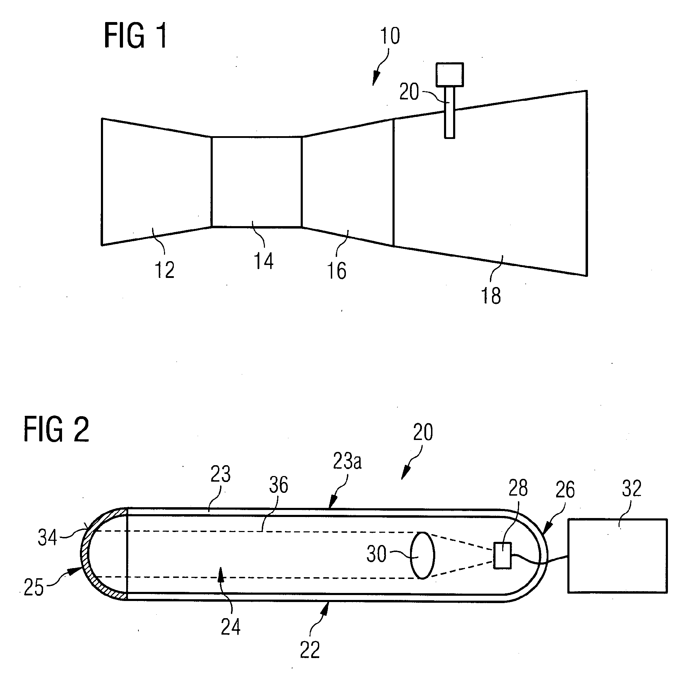

FIG 1 zeigt ein Ausführungsbeispiel einer erfindungsgemäßen Turbine 10 in Gestalt einer Gasturbine. Die Turbine 10 umfasst einen Verdichter 12, in dem angesaugte Luft mittels Verdichterschaufeln komprimiert wird. An den Verdichter 12 schließt sich ein Brennabschnitt 14 mit mindestens einer Brennkammer an, in der die mit Brennstoff versetzte Luft verbrannt wird. Ein dabei entstehendes Strömungsmedium in Form eines Abgases treibt in einem sich an den Brennabschnitt 14 anschließenden Turbinenschaufelabschnitt 16 einen in der Zeichnung nicht dargestellten Turbinenrotor an. Schließlich gelangt das Strömungsmedium in Form des Abgases in einen sich an den Turbinenschaufelabschnitt 16 anschließenden Abgaskanal 18. Im Abgaskanal 18 ist ein Temperatursensor 20 zum Messen der Temperatur des Abgases angeordnet. Mittels der gemessenen Temperatur des Abgases kann die Flammenausbildung in der mindestens einen Brennkammer des Brennabschnitts 14 überwacht werden.

In FIG 2 ist der Temperatursensor 20 gemäß FIG 1 im Detail dargestellt. Der Temperatursensor 20 umfasst einen einen Innenraum 24 umgebenden länglichen Hohlkörper 22 mit einer ersten Stirnseite 25 und einer zweiten Stirnseite 26. Die Wandung 23 des Hohlkörpers 22 weist Quarzglas auf. Der zwischen den beiden Stirnseiten 25 und 26 liegende Abschnitt der Wandung 23 des Hohlkörpers 22 ist als Sichtrohr 23a ausgebildet.

An der ersten Stirnseite 25 ist eine eine Konvektionsoberfläche 34 bildende Beschichtung auf die Quarzglasoberfläche aufgebracht. Die Konvektionsoberfläche 34 kann mittels Metallbedampfung gebildet werden. Alternativ kann die Konvektionsoberfläche auch eine spezielle Oxidschicht aufweisen. Die Beschichtung der Konvektionsoberfläche 34 ist so gewählt, dass sich ihre Temperatur schnell an die Temperatur des als Strömungsmedium dienenden Abgases anpasst. Die Konvektionsoberfläche 34 strahlt eine temperaturspezifische Infrarotstrahlung 36 in den Innenraum 24 des Hohlkörpers 24 ab. In dem an der zweiten Stirnseite 26 des Hohlkörpers 22 gelegenen Bereich des Innenraums 24 ist ein Infrarotdetektor 28 mit einer davor geschalteten Infrarotoptik 30 angeordnet. Eine von der Konvektionsoberfläche 34 in den Innenraum 24 abgestrahlte Infrarotstrahlung 36 wird über die Infrarotoptik 30 auf den Infrarotdetektor 28 fokussiert. Der Infrarotdetektor 28 kann Thermopaare, pneumatische oder pyroelektrische Detektoren und/oder ein Bolometer zur Erfassung der Intensität der eingestrahlten Infrarotstrahlung 36 aufweisen. An den Infrarotdetektor 28 ist eine Auswerteeinheit 32 zum Auswerten der vom Infrarotdetektor 28 erzeugten elektrischen Signale angeschlossen.

## Patentansprüche

1. Temperatursensor (20) für eine Turbine (10) eines thermischen Kraftwerks,
insbesondere für eine Gasturbine,
zum Messen der Temperatur eines Strömungsmediums innerhalb der Turbine (10),
**gekennzeichnet durch**
einen Infrarotdetektor (28) zum Messen einer Infrarotstrahlung (36).

2. Temperatursensor nach Anspruch 1,
**dadurch gekennzeichnet, dass**
der Infrarotdetektor (28) zum Messen einer Intensität der Infrarotstrahlung (36) ausgebildet ist.

3. Temperatursensor nach Anspruch 1 oder 2,
**dadurch gekennzeichnet, dass**
der Temperatursensor (20) einen Hohlkörper (22) umfasst, der insbesondere eine längliche Form aufweist.

4. Temperatursensor nach Anspruch 3,
**dadurch gekennzeichnet, dass**
der Hohlkörper (22) eine erste Stirnseite (25) umfasst, die insbesondere eine gerundete Form aufweist.

5. Temperatursensor nach Anspruch 4,
**dadurch gekennzeichnet, dass**
eine Wandung (23) des Hohlkörpers (22) an der ersten Stirnseite (25) ein Material (34) mit geringer spezifischer Wärmekapazität enthält,
welches insbesondere an einer Außenseite der Wandung (23) angeordnet ist.

6. Temperatursensor nach Anspruch 5,
**dadurch gekennzeichnet, dass**
die Wandung (23) des Hohlkörpers (22) an der ersten Stirnseite (25) Quarzglas enthält,
welches insbesondere mit dem Material (34) mit geringer spezifischer Wärmekapazität beschichtet ist.

7. Temperatursensor nach einem der Ansprüche 4 bis 6,
**dadurch gekennzeichnet, dass**
der Infrarotdetektor (28) einer Innenseite der Wandung (23) an der ersten Stirnseite (25) des Hohlkörpers (22) gegenüber liegend,
insbesondere an einer entgegengesetzt zur ersten Stirnseite (25) angeordneten zweiten Stirnseite (26) des Hohlkörpers (22),
angeordnet ist.

8. Temperatursensor nach einem der Anspruche 5 bis 7,
**dadurch gekennzeichnet, dass**
die Wandung (23) einen durchsichtigen Wandabschnitt (23a) aufweist,
der insbesondere zwischen einer ersten Stirnseite (25) und einer zweiten Stirnseite (26) des Hohlkörpers (22) angeordnet ist.

9. Turbine (10) für ein thermisches Kraftwerk,
insbesondere Gasturbine, mit einem Temperatursensor (20) nach einem der Ansprüche 1 bis 8.

10. Turbine nach Anspruch 9,
**gekennzeichnet durch**
eine Brennkammer zum Verbrennen eines Gas/Brennstoffgemisches und einen der Brennkammer nachgeschalteten Abgaskanal (18) zum Führen von in der Brennkammer bei der Verbrennung erzeugtem Abgas,
wobei der Temperatursensor (20) in dem Abgaskanal (18) zum Messen der Temperatur des Abgases angeordnet ist.
